# FASCICULE DE BREVET EUROPEEN

(11) **EP 1 104 736 B1**
(45) Date de publication et mention de la délivrance du brevet: **11.08.2004**
(21) Numéro de dépôt: 00403346.0
(22) Date de dépôt: 30.11.2000
(51) Int. Cl.: B62D 1/16

(54) **Dispositif d'assemblage d'un pignon de direction avec un étrier**
Vorrichtung zum Verbinden eines Lenkungsritzels mit einem Bügel
Device for assembling a steering pinion with a yoke

(30) Priorité: 03.12.1999 FR 9915251
(43) Date de publication de la demande: 06.06.2001
(73) Titulaire: Renault s.a.s., 92100 Boulogne Billancourt (FR)
(72) Inventeur: Forte, Jean-Pierre, 28210 Nogent Le Roi (FR); Tchernatinsky, Olivier, 78280 Guyancourt (FR)

(56) Documents cités:
- FR-A- 1 019 367
- FR-A- 2 741 407
- GB-A- 2 312 034

## Description

La présente invention concerne un dispositif destiné à permettre l'assemblage d'un pignon de boîtier de direction d'un véhicule avec un étrier solidaire de l'extrémité d'un arbre de direction, selon le préambule de la revendication 1 et connu de la publication GB-A-2 312 034.

La publication FR-2.741.407 décrit un dispositif dans lequel une vis vient coopérer avec un écrou, l'écrou et la vis étant en contact avec les deux faces externes de l'étrier en fin d'assemblage. Lors du serrage de la vis, une languette élastique portée par un bras solidaire de l'étrier maintient l'écrou dans un trou correspondant de l'étrier.

Un tel dispositif nécessite cependant de pouvoir accéder aisément à la face de l'étrier comportant le trou de montage de l'écrou ; de plus, il n'assure pas le maintien en rotation de l'écrou lors de l'engagement des filets de la vis dans le taraudage de l'écrou. Enfin, il ne permet pas d'éviter un desserrage intempestif de l'écrou. Le volume occupé par le bras est en outre non négligeable.

La présente invention se propose de pallier ces inconvénients.

A cet effet, la présente invention propose un dispositif d'assemblage destiné à relier deux éléments d'une colonne de direction de véhicule automobile, du type comprenant un étrier solidaire d'une colonne de direction d'automobile dans lequel vient s'engager un organe complémentaire tel qu'un pignon solidaire de l'axe du boîtier de direction, et un organe de serrage du pignon dans l'étrier comprenant une vis dotée d'une tête et d'une extrémité filetée, caractérisé en ce que l'extrémité filetée de la vis coopère avec un écrou monté dans un support d'écrou, ledit support d'écrou étant porté par l'une des branches de l'étrier et en ce que l'écrou est apte à se déplacer à l'intérieur du support d'écrou entre une position permettant le montage du pignon entre les branches de l'étrier et une position assurant le serrage du pignon et de l'étrier.

Selon une autre caractéristique de la présente invention, le support d'écrou comprend un élément tubulaire cylindrique dont l'une des extrémités est fermée par une paroi percée d'un trou central.

Selon une autre caractéristique de la présente invention, l'écrou est maintenu en position axiale autorisant le montage du pignon entre les branches de l'étrier par la paroi du support d'écrou et un frein d'écrou monté dans le trou central.

Selon une autre caractéristique de la présente invention, l'écrou comporte à l'une de ses extrémités un collet radial cylindrique dont l'une des surfaces axiales se prolonge par une surface externe conique évasée vers l'axe de l'écrou.

Selon une autre caractéristique de la présente invention, une première partie cylindrique de l'écrou fait saillie de l'autre surface axiale du collet et se prolonge par une seconde partie cylindrique excentrée par rapport à la première.

Selon une autre caractéristique de la présente invention, les surfaces externes des deux parties cylindriques sont reliées par un chanfrein, la seconde partie cylindrique tangentant intérieurement la première partie cylindrique.

D'autres caractéristiques et avantages de l'invention apparaîtront mieux à la lecture de la description détaillée qui suit pour la compréhension de laquelle on se reportera aux dessins annexés dans lesquels :
- la figure 1 est une vue en coupe axiale d'un système de fixation par vis et écrou d'un étrier d'une colonne de direction de véhicule automobile devant être assemblé avec un élément solidaire de l'axe du boîtier de direction, l'ensemble étant représenté avant assemblage,
- la figure 2 est une vue en coupe axiale d'un système de fixation par vis et écrou d'un étrier d'une colonne de direction de véhicule automobile devant être assemblé avec un élément solidaire de l'axe du boîtier de direction, l'ensemble étant représenté après assemblage,
- la figure 3 est une vue en perspective du système de fixation représenté à la figure 1,
- la figure 4 est une vue de détail de la figure 2,
- la figure 5 est une vue de côté de la figure 4.

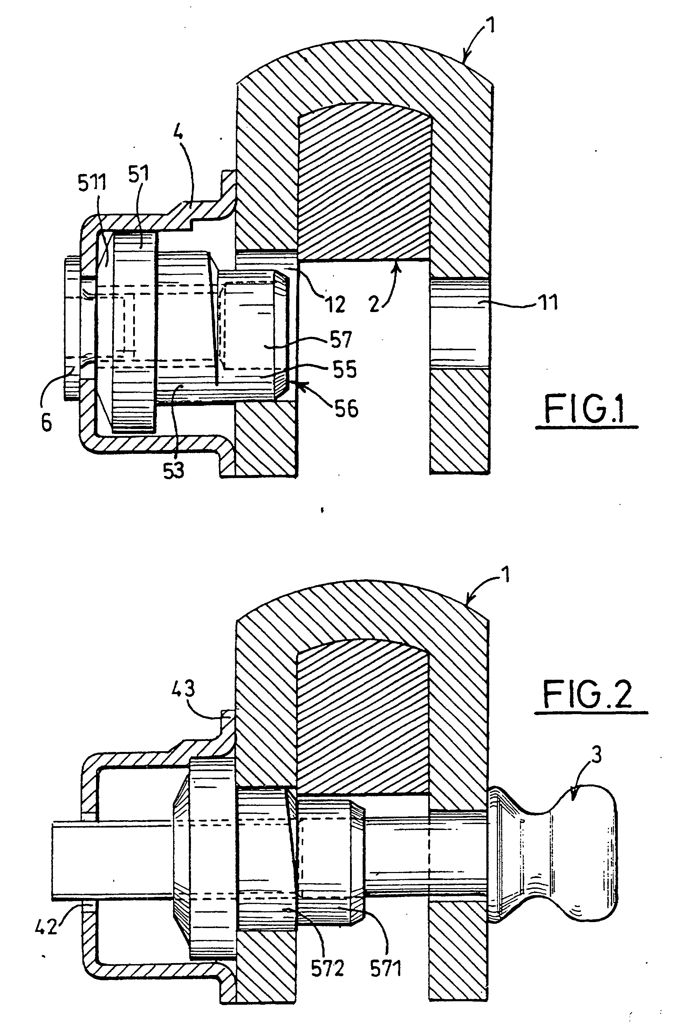

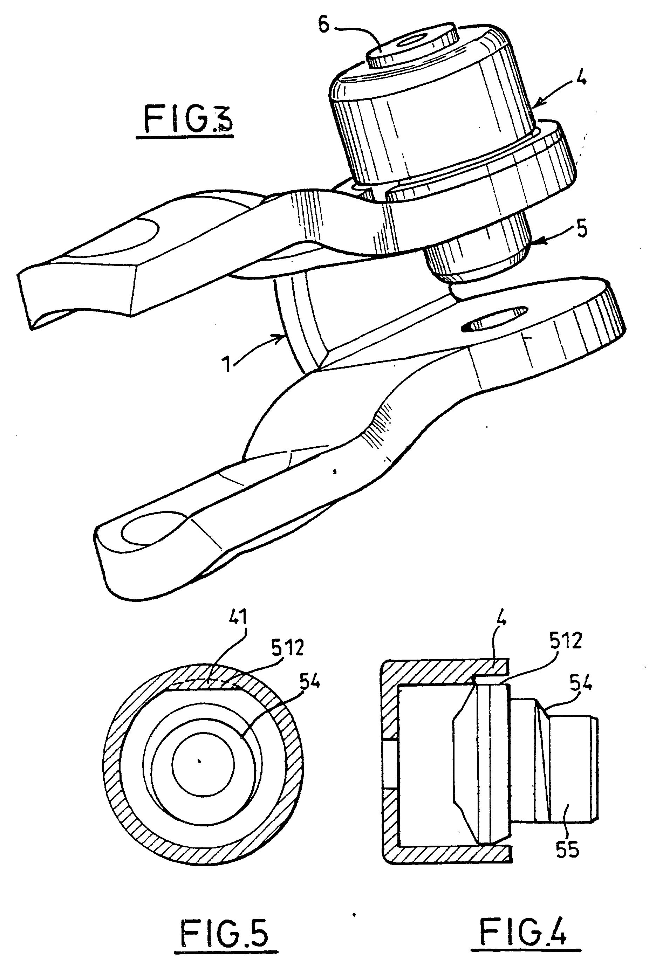

Le dispositif de fixation selon l'invention représenté sur les figures 1 à 5 se rapporte à une vis 3 et un écrou 5 qui sont destinés à assembler un élément en forme d'étrier 1 solidaire d'une colonne de direction d'automobile avec un pignon 2 solidaire de l'axe du boîtier de direction.

L'élément en forme d'étrier 1 a une section en U qui possède deux branches sensiblement parallèles l'une par rapport à l'autre et qui sont reliées par un élément transversal. Les deux branches de l'étrier sont reliées à l'extrémité de la colonne de direction par une liaison de type cardan (non représentée).

Le pignon 2 s'engage entre les branches de l'étrier 1 ; ce pignon 2 présente une section non circulaire et possède trois méplats ainsi qu'un secteur cylindrique.

Selon cette réalisation, deux méplats sont disposés symétriquement par rapport au secteur cylindrique et sont parallèles l'un par rapport à l'autre de manière à pouvoir coulisser entre les branches de l'étrier. Le troisième méplat est perpendiculaire aux deux autres méplats.

Un trou 11 est aménagé dans la branche de l'étrier. Le trou a des dimensions qui correspondent au passage de la tige de la vis, et il est aligné avec un logement 12 qui a des dimensions plus importantes de manière à correspondre aux dimensions d'un écrou 5.

L'écrou 5 de type monobloc, comporte à l'une de ses extrémités un collet 51 radial cylindrique dont l'une des surfaces axiales se prolonge par une surface externe conique 511 évasée vers l'axe de l'écrou 5.

Une première partie cylindrique 53 fait saillie de l'autre surface axiale du collet 51 et se prolonge par une seconde partie cylindrique 55 excentrée par rapport à la première ; les surfaces externes des deux parties cylindriques sont reliées par un chanfrein 54 ; la seconde partie cylindrique tangente intérieurement la première partie cylindrique.

L'extrémité de la seconde partie cylindrique se termine par un chanfrein.

L'écrou 5 est traversé par un alésage 57 cylindrique coaxial à l'axe du collet et dont les dimensions permettent le passage de la tige de la vis 3.

Cet alésage comporte une première surface interne cylindrique, lisse 571, qui se prolonge par une seconde surface interne cylindrique taraudée 572 d'un diamètre inférieur au diamètre de la première surface interne.

Une bague élastique (non représentée) est montée dans une gorge ménagée sur la face interne du taraudage ; la fonction de cette bague élastique est d'entraîner l'écrou en rotation lors du vissage et de garantir le plaquage de l'écrou contre le pignon 2 ; cette fonction peut être réalisée, par exemple, par une bague élastique en nylon ou bien par une déformation du filet du taraudage.

L'écrou est monté dans un logement d'un support d'écrou 4.

Le support d'écrou 4 est constitué par un élément tubulaire cylindrique dont l'une des extrémités est fermée par une paroi percée d'un trou central 42 ; l'autre extrémité du support d'écrou 4 est ouverte et se termine par une collerette 43 faisant saillie radialement vers l'extérieur.

L'écrou 5 est solidarisé au support d'écrou par un frein d'écrou 6 constitué par une tête prolongée par un corps cylindrique qui vient coopérer avec le taraudage de l'écrou 3 ; la tête du frein d'écrou 6 vient s'appliquer contre la surface externe de la paroi du support d'écrou. L'écrou est donc maintenu en position axiale par la paroi du support d'écrou et le frein d'écrou.

Un méplat 512 de l'écrou 5 coopère avec un méplat complémentaire 41 du support d'écrou ce qui assure un maintien en rotation de l'écrou 5 par rapport au corps d'écrou 4.

La collerette 43 du support d'écrou 4 est sertie sur la face externe de l'une des branches de l'étrier.

Le fonctionnement du dispositif selon l'invention est le suivant : la vis 3 pénètre dans le trou 11 aménagé dans la branche de l'étrier 1 et vient s'engager dans la partie taraudée de l'écrou 5 qui est monté dans le support d'écrou 4 fixé sur l'autre face externe de l'étrier 1. Le pignon 2 vient s'engager à l'intérieur de l'étrier 1 et sa position est assurée en fin de blocage par la vis 3 qui vient s'engager sous ce pignon.

Le serrage de la vis s'effectue en deux temps :
- dans un premier temps, la paroi axiale du support d'écrou 4 et le frein d'écrou 6 assurent un positionnement relatif temporaire en rotation et axial de sorte que la vis 3 vienne s'engager correctement dans l'écrou 5 ; lorsque les filets de la vis sont en prise avec une longueur suffisante du taraudage de l'écrou, l'extrémité de la vis éjecte le frein d'écrou 6.
- dans un deuxième temps, au delà d'une certaine course en translation pure de l'écrou qui correspond à la longueur axiale des méplats 41, 512 l'écrou est entraîné en rotation et le cylindre excentré 55 de l'écrou 5 vient alors plaquer l'élément à assembler contre l'étrier 1 de manière à assurer un fonctionnement sans jeu du dispositif.

En fin de serrage de la vis 3, le collet 51 vient s'appliquer contre la face externe de la branche de l'étrier.

Le dispositif selon l'invention permet de garantir la présence de l'écrou dans tous les cas ce qui évite les tâtonnements auparavant imposés à l'opérateur lors du montage ; le temps de montage en est réduit d'autant.

En outre, ce dispositif permet d'améliorer le plaquage et le serrage du pignon contre l'étrier.

Bien entendu, l'invention n'est nullement limitée au mode de réalisation décrit et illustré qui n'a été donné qu'à titre d'exemple. C'est dire que l'invention comprend tous les équivalents techniques des moyens décrits ainsi que leurs combinaisons si celles-ci entrent dans le cadre des revendications qui suivent.

## Revendications

1. Dispositif d'assemblage destiné à relier deux éléments d'une colonne de direction de véhicule automobile, du type comprenant un étrier (1) solidaire d'une colonne de direction d'automobile dans lequel vient s'engager un organe complémentaire tel qu'un pignon (2) solidaire de l'axe du boîtier de direction, et un organe de serrage du pignon dans l'étrier comprenant une vis (3) dotée d'une tête et d'une extrémité filetée, coopèrant avec un écrou (5) monté dans un support d'écrou (4), ledit support (4) d'écrou étant porté par l'une des branches de l'étrier (1) **caractérisé en ce que** l'écrou (5) est apte à se déplacer à l'intérieur du support d'écrou entre une position permettant le montage du pignon entre les branches de l'étrier et une position assurant le serrage du pignon et de l'étrier.

2. Dispositif selon la revendication 1, **caractérisé en ce que** le support d'écrou (4) comprend un élément tubulaire cylindrique dont l'une des extrémités est fermée par une paroi percée d'un trou central (42).

3. Dispositif selon la revendication 2, **caractérisé en ce que** l'écrou (5) est maintenu en position axiale autorisant le montage du pignon (6) entre les branches de l'étrier (1) par la paroi du support d'écrou et un frein d'écrou (6) monté dans le trou central (42).

4. Dispositif selon l'une des revendications précédentes, **caractérisé en ce que** l'écrou (5) comporte à l'une de ses extrémités un collet (51) radial cylindrique dont l'une des surfaces axiales se prolonge par une surface externe conique (511) évasée vers l'axe de l'écrou (5).

5. Dispositif selon la revendication 4, **caractérisé en ce qu'**une première partie cylindrique (53) de l'écrou fait saillie de l'autre surface axiale du collet (51) et se prolonge par une seconde partie cylindrique (55) excentrée par rapport à la première.

6. Dispositif selon la revendication 5, **caractérisé en ce que** les surfaces externes des deux parties cylindriques (53,55) sont reliées par un chanfrein (54) et **en ce que** la seconde partie cylindrique tangente intérieurement la première partie cylindrique.

## Patentansprüche

1. Montagevorrichtung, dazu bestimmt, zwei Elemente einer Lenksäule eines automobilen Fahrzeugs zu verbinden, von dem Typ, welcher einen Bügel (1), der fest mit einer Lenksäule eines Automobils verbunden ist, in welchen eine komplementäre Einrichtung, wie ein Ritzel (2), das fest mit der Achse des Lenkgehäuses verbunden ist, eingreifen wird, und eine Einrichtung zum Spannen des Ritzels in dem Bügel umfasst, die eine Schraube (3) umfasst, welche mit einem Kopf und einem Ende mit Gewinde versehen ist, welches mit einer Schraubenmutter (5) zusammenwirkt, welche in einem Schraubenmutterhalter (4) montiert ist, wobei der Halter (4) der Schraubenmutter durch einen der Schenkel des Bügels (1) getragen wird,
**dadurch gekennzeichnet, dass**
die Schraubenmutter (5) dazu geeignet ist, sich im Inneren des Schraubenmutterhalters zwischen einer Position, welche die Montage des Ritzels zwischen den Bügelschenkeln erlaubt, und einer Position, welche das Spannen des Ritzels und des Bügels sicherstellt, verschieben kann.

2. Vorrichtung gemäß Anspruch 1, **dadurch gekennzeichnet, dass** der Schraubenmutterhalter (4) ein zylindrisches rohrförmiges Element umfasst, wobei eines seiner Enden durch eine Wandung, welche durch ein zentrales Loch (42) durchstoßen wird, verschlossen ist.

3. Vorrichtung gemäß Anspruch 2, **dadurch gekennzeichnet, dass** die Schraubenmutter (5) in axialer Position gehalten wird, welche die Montage des Ritzels (6) zwischen den Schenkeln des Bügels (1) durch die Wandung des Schraubenmutterhalters und eine Sicherung (6), welche in dem zentralen Loch (42) montiert ist, erlaubt.

4. Vorrichtung gemäß einem der vorhergehenden Ansprüche, **dadurch gekennzeichnet, dass** die Schraubenmutter (5) an einem ihrer Enden einen zylindrischen radialen Ring (51) umfasst, wobei eine der axialen Oberflachen sich zu einer konischen externen Fläche (511) verlängert, welche sich konisch zur Achse der Schraubenmutter (5) erweitert.

5. Vorrichtung gemäß Anspruch 4, **dadurch gekennzeichnet, dass** ein erster zylindrischer Teil (53) der Schraubenmutter über die andere axiale Fläche des Rings (52) herausragt und sich zu einem zweiten zylindrischen Teil (55) verlängert, welcher exzentrisch im Verhältnis zum ersten ist.

6. Vorrichtung gemäß Anspruch 5, **dadurch gekennzeichnet, dass** die externen Flächen der zwei zylindrischen Teile (53, 55) verbunden sind durch eine Seitenfase (54) und dadurch, dass der zweite zylindrische Teil innen den ersten zylindrischen Teil tangiert.

## Claims

1. An assembly device adapted to connect two members of a steering column of an automobile vehicle, of the type comprising a yoke (1) rigid with an automobile steering column in which there engages a complementary member such as a pinion (2) rigid with the axle of the steering housing, and a member for clamping the pinion in the yoke comprising a screw (3) provided with a head and a threaded end cooperating with a nut (5) mounted in a nut support (4), the nut support (4) being borne by one of the arms of the yoke (1), **characterised in that** the nut (5) is adapted to be displaced within the nut support between a position enabling the mounting of the pinion between the arms of the yoke and a position ensuring the clamping of the pinion and the yoke.

2. A device as claimed in claim 1, **characterised in that** the nut support (4) comprises a cylindrical tubular member, one of whose ends is closed by a wall drilled with a central hole (42).

3. A device as claimed in claim 2, **characterised in that** the nut (5) is held in axial position enabling the mounting of the pinion (6) between the branches of the yoke (1) by the wall of the nut support and a nut brake (6) mounted in the central hole (42).

4. A device as claimed in one of the preceding claims, **characterised in that** the nut (5) comprises, at one of its ends, a cylindrical radial collar (51) one of whose axial surfaces is prolonged by a conical outer surface (511) flared towards the axis of the nut (5).

5. A device as claimed in claim 4, **characterised in that** a first cylindrical portion (53) of the nut projects from the other axial surface of the collar (51) and is prolonged by a second cylindrical portion (55) eccentric with respect to the first.

6. A device as claimed in claim 5, **characterised in that** the outer surfaces of the two cylindrical portions (53, 55) are connected by a chamfer (54) and **in that** the second cylindrical portion is internally tangential to the first cylindrical portion.
